# EUROPEAN PATENT APPLICATION

(11) **EP 1 217 282 A1**
(43) Date of publication of application: **26.06.2002**
(21) Application number: 00500266.2
(22) Date of filing: 22.12.2000
(51) Int. Cl.: F16L 25/00

(54) **Improved thermoplastic pipe**

(71) Applicant: Plasticos IMA, S.A., 29300 Archidona (Malaga) (ES)
(72) Inventor: Barredo Ruiz, Martin, 29300 Archidona (Malaga) (ES)
(74) Representative: Toro Gordillo, Ignacio Maria

(57) **Abstract**

Of the type with a double wall structure, specifically a cylindrical smooth inner wall (1) and a corrugated outer wall (2), which at one of the ends of the pipe is prolonged beyond the inner wall (1) in a smooth area (3) with an appropriate diameter to receive the opposite end of another section of pipe inside, a watertight joint being inserted (7). Its characteristics arise from the fact that in the said smooth terminal section (3) it incorporates a ring-shaped reinforcement band (5), which may be made of plastic or metal and which will be variable in both thickness and in its axial measurement, according to the diameter of the pipes to be joined and to the circumferential stiffness of the same.

## Description

### OBJECT OF THE INVENTION

The present invention refers to a thermoplastic pipe of the type which has a double wall structure and a corrugated exterior, which has been notably improved in order to reinforce the end of the same which is intended for the classic plug and socket connection between sections of pipe.

### BACKGROUND OF THE INVENTION

The type of pipe mentioned above, with a double wall structure, is manufactured by extruding two tubular profiles, one smooth, for the interior of the pipe, and the other one folded in or corrugated, which forms the enveloping wall or exterior of the same, which defines the shape or appearance of the pipe and provides it with the necessary rigidity.

The inner and smooth layer moves along a cooling mandrel which gives the inner shape to the piping with the help of external air pressure, while the outer layer is shaped by means of moulds with the negative profile of the pipe, in such a way that in the valleys of the said profile the two layers or walls are joined, the smooth and inner one and the corrugated or outer one, forming a unit made up of a single piece.

These pipes are manufactured in sections which must be subsequently inter-connected, specifically by plugging one section of pipe into the corresponding end of the other one. In this sense, one of the moulds gives the shape to the mouth of the pipe, with the appropriate dimensions to receive the corresponding end of another section or pipe. Thus, and in spite of the fact that the pipe is manufactured as an endless piece, the latter is cut into predetermined sections and at the end of each section there is an area of outer wall which is free of corrugation and basically smooth, with an inner diameter appropriate for receiving in its interior, tightly fitting and with at least one watertight joint being inserted, the corrugated end of another section of pipe, for which purpose, obviously, the inner wall is cut, for example, with a circular saw, at the point at which the smooth and slightly widened mouth of the outer wall begins.

For a thermoplastic pipe of this type this requires determinate features from the point of view of structural rigidity in the coupling between sections which depend on the thickness given to the pipe's outer wall and the nature of the material used.

### DESCRIPTION OF THE INVENTION

The thermoplastic pipe proposed by the invention, on the basis of the structure of any conventional pipe of this type, has been notably improved in order to achieve a marked reinforcement of the mouth of each section of the same, into which the opposite and corrugated end of another section is plugged.

To this end and more specifically, the invention consists of providing the smooth end area of each section corresponding to the outer wall of the pipe with at least one ring-shaped band, located in the sealing area between sections in which the watertight joint is situated, the ring-shaped band being made of any appropriate material, such as for example, plastic or metal, and of variable dimensions, both in its axial measurement and in its thickness, according to the diameter of the pipe itself and the circumferential stiffness of the same.

### DESCRIPTION OF THE DRAWINGS

To complement the description being given and to promote a better understanding of the features of the invention, in accordance with a preferred practical embodiment of the same, a set of drawings accompany and form an integral part of the said description. This set of drawings, by way of illustration and non-restrictively, represents the following:

Figure 1.- Shows a detail in cross-section of the double wall of a conventional thermoplastic pipe at the level of the receiving end of another section of pipe of the same characteristics.

Figure 2.- Shows, according to a representation similar to that of the foregoing figure, the same pipe provided with the improvements which are the object of the present invention.

Figure 3.- Shows, finally and also according to a representation similar to that of the foregoing figures, the coupling between two sections of pipe carried out in accordance with the invention.

### PREFERRED EMBODIMENT OF THE INVENTION

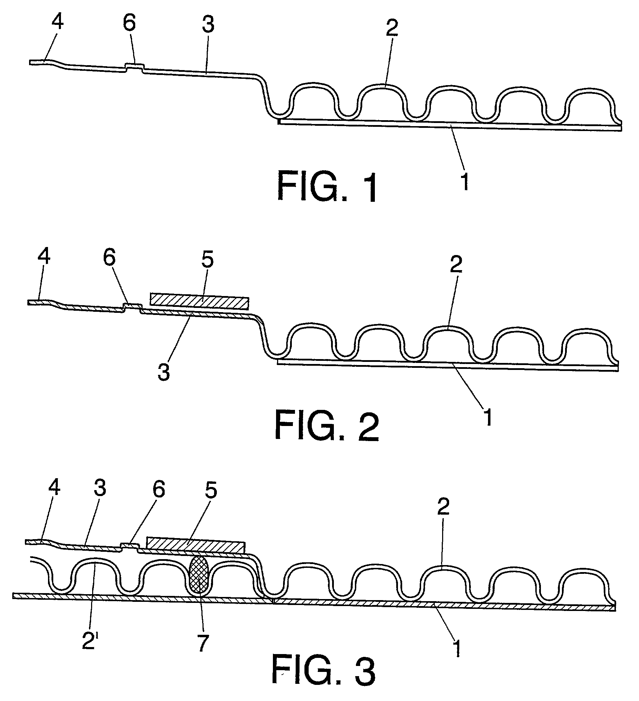

Figure 1 represents a conventional thermoplastic pipe to which the improvements of the invention are applicable and which, as may be clearly seen in the said figure, is made up of a smooth inner wall (1), that is, perfectly cylindrical, and a corrugated outer wall (2), the smooth wall being interrupted at one of its ends appreciably before the corrugated wall (2), in such a way that the latter is prolonged with respect to the former in an area (3) which is also smooth and of an appropriate diameter to receive inside, by plugging, the other end of a second section of pipe which lacks the said projection (3), this projection having its free end (4) expanded in order to facilitate the said plugging operation.

Thus, the invention consists of providing this smooth end area (3) of the pipe's outer wall with a ring-shaped reinforcement band (5), preferably made of plastic material, although it may also be of a metallic nature, even a hose clip, situated preferably in its inner half, defined by the perimetric and intermediate projection (6) and in correspondence with which the classic watertight joint (7) is established, specifically housed in one of the "valleys" of the outer corrugated wall (2') of the corresponding end of the other segment, as may be observed particularly in figure 3.

This reinforcement layer (5) with variable thickness and width appropriate to the needs of each case, considerably strengthens the mechanical resistance of the tubular end area (3) against the pressure that exists inside the pipe under working conditions, the said thickness being variable according to the diameter of the pipes to be joined and to the circumferential stiffness of the same, a greater mechanical resistance and also an optimal watertightness having been verified in trials carried out for this purpose.

## Claims

1. Improved thermoplastic pipe, of the type which has a double wall structure, specifically based on a smooth inner wall, that is, cylindrical, and a corrugated outer wall which at one of the ends of the pipe is prolonged beyond the inner wall in a smooth area, with a diameter appropriate to receive inside, by plugging, another section of pipe, with an inserted watertight joint, **characterised in that** it incorporates, in the said smooth terminal section which finishes one of the ends of its outer wall, at least one ring-shaped reinforcement band situated in a position corresponding to the area intended for the watertight joint between the pipe sections to be joined.

2. Improved thermoplastic pipe in accordance with claim 1, **characterised in that** the ring-shaped band has a variable thickness and axial measurement, according to the diameter of the pipes to be joined and to the circumferential stiffness of the same.

3. Improved thermoplastic pipe in accordance with the foregoing claims, **characterised in that** the ring-shaped reinforcement band is made of plastic material.

4. Improved thermoplastic pipe in accordance with claims 1 and 2, **characterised in that** the ring-shaped reinforcement band is of a metallic nature.
